# EUROPÄISCHE PATENTSCHRIFT

(11) **EP 2 396 096 B1**
(45) Veröffentlichungstag und Bekanntmachung des Hinweises auf die Patenterteilung: **01.03.2017**
(21) Anmeldenummer: 10702593.4
(22) Anmeldetag: 15.01.2010
(51) Int. Cl.: B01D 35/18, B01D 17/00, B01D 36/00, F02M 27/04, B01D 17/04, B01D 17/06, F02M 37/22

(54) **VORRICHTUNG FÜR EIN KRAFTSTOFF-FILTERSYSTEM**
DEVICE FOR A FUEL FILTER SYSTEM
DISPOSITIF POUR UN SYSTÈME DE FILTRATION DE CARBURANT

(30) Priorität: 12.02.2009 DE 102009008676
(43) Veröffentlichungstag der Anmeldung: 21.12.2011
(73) Patentinhaber: Hydac Filtertechnik GmbH, 66280 Sulzbach/Saar (DE)
(72) Erfinder: DEWES, Markus, 66649 Oberthal (DE)
(74) Vertreter: Bartels, Martin Erich Arthur
(86) Internationale Anmeldenummer: PCT/EP2010/000179
(87) Internationale Veröffentlichungsnummer: WO 2010/091767

(56) Entgegenhaltungen:
- EP-A1- 0 317 816
- EP-A2- 1 726 818
- DE-A1- 19 506 857
- DE-A1- 19 509 367
- GB-A- 1 128 758
- US-A- 3 165 470
- US-A- 4 988 427

## Beschreibung

Die Erfindung betrifft eine Vorrichtung für ein Kraftstoff-Filtersystem, das Wasser aus dem Kraftstoff ausscheidet, wobei mittels der Vorrichtung das Wasser durch Einwirken eines Mediums in Form eines Salzes eine das Abscheiden begünstigende Eigenschaft annimmt.

Kraftstoff-Filtersysteme für die Versorgung von Antrieben verschiedener Art sind gemäß dem Stand der Technik so ausgelegt, dass nicht nur Verunreinigungen wie Schwebepartikel, Staub und dergleichen abgesondert werden, sondern dass auch Wasser abgeschieden wird. Derartige Filtersysteme werden insbesondere bei Dieselmotoren zum Schutz des Einspritzsystems eingesetzt. In EP 1 669 590 A1 ist beispielsweise ein Filtersystem offenbart, das bei der Kraftstoffversorgung von Kraftfahrzeugen eine Wasserabscheidung vorsieht.

Aus der US 3 165 470 ist eine Flüssigkeitskoaleszierungs- und Flüssigkeitsabscheidungsvorrichtung, insbesondere ein Kraftstofffilter, im Stand der Technik bekannt. In dieser Vorrichtung sind die Fasern eines Filtermediums mit Salzkristallen beschichtet.

Für den sicheren Betrieb der durch ein betreffendes Kraftstoffsystem zu versorgenden Anlagen, ist eine hohe Effizienz der Wasserabscheidung wesentlich. Im Hinblick hierauf stellt sich die Erfindung die Aufgabe, eine Vorrichtung für ein Kraftstoff-Filtersystem zur Verfügung zu stellen, die eine besonders wirksame Abscheidung von in Kraftstoffen, insbesondere Dieselkraftstoffen, enthaltenem Wasser gewährleistet.

Erfindungsgemäß ist diese Aufgabe durch eine Vorrichtung gelöst, die die Merkmale des Patentanspruches 1 in seiner Gesamtheit aufweist.

Die Vorrichtung weist mindestens ein Gehäuse und/oder einen in dem Gehäuse aufgenommenen Einsatz in Form einer auswechselbaren Kartusche für die Aufnahme einer Füllmenge des Salzes in fester Form als Block oder Stick, das im Gehäuse mit dem dem Filtersystem zuströmenden Kraftstoff kontaktierbar ist und derart gestaltet ist, dass die Kartusche das Gehäuse im Wesentlichen passend ausfüllt.

Demgemäß sieht die Erfindung vor, dass mittels der Vorrichtung durch Einsatz eines Mediums eine Änderung der Eigenschaften des Wassers derart stattfindet, dass mittels des zugeordneten Filtersystems eine verbesserte Abscheidung des Wassers erfolgt. Somit eröffnet sich die Möglichkeit, mit Filtersystemen üblicher Bauweise, die der erfindungsgemäßen Vorrichtung nachgeschaltet sind, aus dem sozusagen "vorbehandelten" Kraftstoff, eine weitestgehende Wasserabscheidung zu erreichen.

Hierbei wird so vorgegangen, dass durch Einwirken des Mediums sich das Tropfenvolumen des Wassers vergrößert.

Grundsätzlich läßt sich die Wasserabscheidung begünstigen, indem das zum Einsatz kommende Medium, als Vorstufe zu dem im nachgeordneten Filtersystem stattfindenden Abscheidevorgang, das Koaleszenzverhalten in geeigneter Weise beeinflußt.

Um die Koaleszenz zu begünstigen erfährt das Wasser durch Einwirken des Mediums eine Polarisation und/oder Ionisierung.

Das die Koaleszenz begünstigende Medium ist auf Salzbasis aufgebaut. Die im Kraftstoff dadurch entstehenden Effekte bewirken, dass sich Wasser zu größeren Konglomeraten sammelt. Die Benutzung von Natriumchlorid (NaCl) hat sich als besonders günstig erwiesen.

In besonders vorteilhafter Weise kann hierbei das Gehäuse in die zum Filtersystem führende Kraftstoffleitung eingefügt sein und einen Kraftstoffeingang und einen Kraftstoffausgang sowie den zwischen diesen befindlichen Einsatz mit Salzfüllung aufweisen, die vom Kraftstoff durchströmbar ist.

Bei besonders bevorzugten Ausführungsbeispielen ist hierbei vorgesehen, dass der die Salzfüllung enthaltende Einsatz die Form der Kartusche besitzt, die auswechselbar im Gehäuse angeordnet und derart gestaltet ist, dass sie das Gehäuse zwischen Eingang und Ausgang im Wesentlichen passend ausfüllt. Dadurch wird die Salzfüllung vom gesamten durch die Kraftstoffleitung hindurchgeführten Kraftstofffluss durchströmt.

Bei besonders bevorzugten Ausführungsbeispielen bildet die Kartusche eine teilweise Ummantelung der Salzfüllung.

Eine derartige Ausbildung der Kartusche ist besonders vorteilhaft, wenn die Kartusche durch einen Salz in fester Form enthaltenden Stick gebildet ist.Alternativ kann der Kartusche diese Salz in loser Form enthalten.

Vorzugsweise ist die Anordnung so getroffen, dass zumindest am Ausgang des Gehäuses ein den unkontrollierten Austritt von Salz verhinderndes Sieb vorgesehen ist.

Mit besonderem Vorteil kann dieses Sieb an einem Ende der Ummantelung der Kartusche ausgebildet sein, sodass bei einem Wechsel der Kartusche jeweils das betreffende Sieb mit ausgewechselt wird.

Nachstehend ist die Erfindung anhand eines in der Zeichnung dargestellten Ausführungsbeispieles im Einzelnen erläutert. Es zeigen:
- Fig. 1: eine diagrammartig vereinfachte Funktionsskizze eines Kraftstoff-Filtersystems für die Kraftstoffversorgung eines Dieselmotors, versehen mit einem Ausführungsbeispiel der erfindungsgemäßen Vorrichtung;
- Fig. 2: eine näherungsweise in natürlicher Größe einer praktischen Ausführungsform gezeichnete perspektivische Schrägansicht des Ausführungsbeispieles der Vorrichtung;
- Fig. 3: einen Längsschnitt des Ausführungsbeispieles;
- Fig. 4: eine der Fig. 3 ähnliche Schnittdarstellung, jedoch in perspektivischer Schrägansicht dargestellt, und
- Fig. 5: einen schematisch vereinfacht gezeichneten Längsschnitt eines Kraftstoff-Filtersystems, dem die erfindungsgemäße Vorrichtung zugeordnet ist.

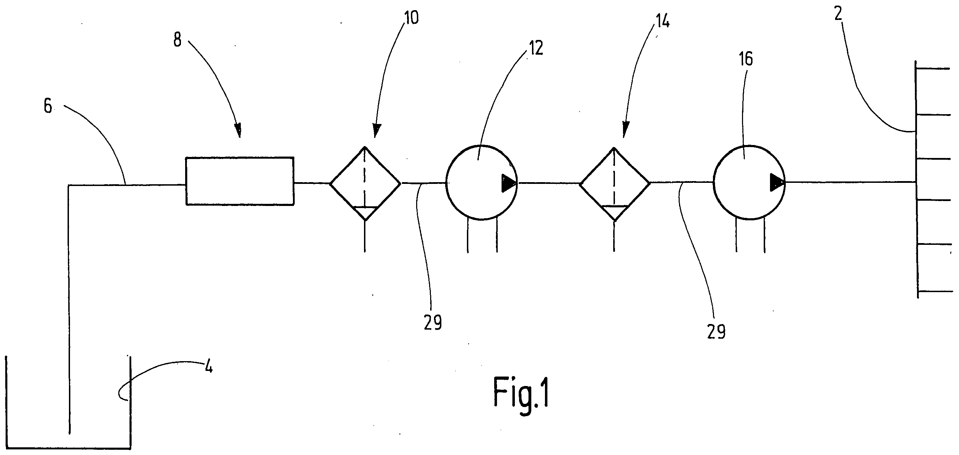

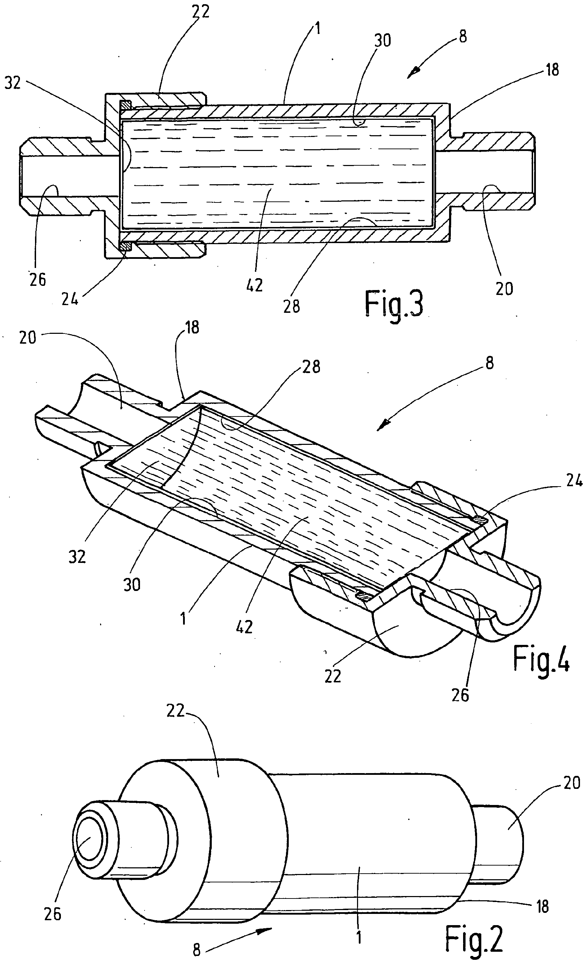

Fig. 1 zeigt eine Übersicht eines Kraftstoff-Filtersystems zur Versorgung eines Dieselmotors 2 mit Dieselkraftstoff aus einem Kraftstofftank 4 über eine Kraftstoffleitung 6, die zu einer als Ganzes mit 8 bezeichneten erfindungsgemäßen Vorrichtung führt, von der das hier zu beschreibende Ausführungsbeispiel in näheren Einzelheiten in den Fig. 2 bis 4 dargestellt ist.

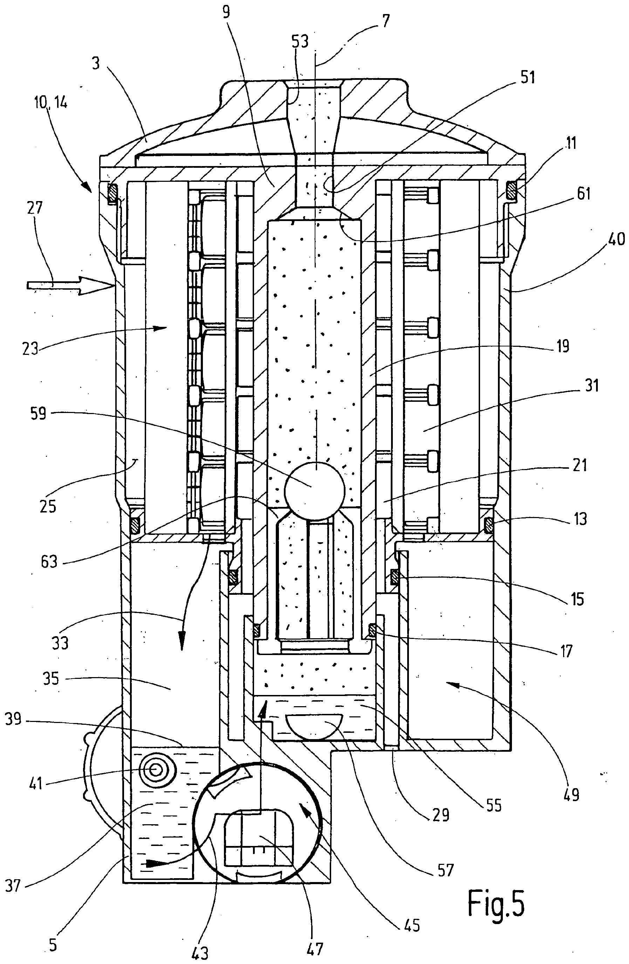

Nach der Vorrichtung 8 setzt sich die Kraftstoffleitung zu einem ersten, wasserabscheidenden Filtersystem 10 und von dort über eine Kraftstoffpumpe 12 zu einem zweiten, wasserabscheidenden Filtersystem 14 fort, von dem aus der gereinigte, wasserfreie Kraftstoff über eine Einspritzpumpe 16 dem Motor 2 zugeteilt wird. Die Filtersysteme 10 und 14, von denen das Filtersystem 10 als Vorfilter und das Filtersystem 14 als Hauptfilter dient, sind in Fig. 5 in näheren Einzelheiten dargestellt. Anstelle zweier wasserabscheidender Filtersysteme 10 und 14 könnte auch lediglich das Vorfilter 10 oder das Hauptfilter 14 wasserabscheidend sein. Die Vorrichtung 8 könnte auch an jeder beliebigen Stelle innerhalb der Kraftstoffleitung oder Rückleitung angeordnet sein.

Entsprechend Fig. 2 bis 4 weist die Vorrichtung 8 ein Gehäuse 1 in kreiszylindrischer Hülsenform auf, das am einen Ende 18 bis auf einen zentral gelegenen Kraftstoffausgang 20 geschlossen ist. Am gegenüberliegenden Ende ist der Gehäusehauptteil durch eine aufgeschraubte Abschlusskappe 22 geschlossen, wobei eine Abdichtung mittels eines O-Ringes 24 vorgesehen ist. Die Kappe 22 weist einen zentral gelegenen Kraftstoffeingang 26 auf.

Durch Abschrauben der Kappe 22 ist der Innenraum des Gehäusehauptteiles zugänglich, um einen Einsatz in Form einer Salzkartusche 28 einzulegen, die im Gehäuse 1 eine Salzfüllung 42 bildet, beim Beispiel Natriumchlorid. Insbesondere, wenn die Salzfüllung 42 aus losem Salz besteht, weist die Kartusche 28 vorzugsweise eine Ummantelung 30 auf. Die Form der Kartusche 28 ist dem kreiszylinderförmigen Innenraum des Gehäuses 1 so angepasst, dass eine im Wesentlichen passende Anlage an den Innenwänden gegeben ist, so dass der gesamte Kraftstoffstrom die Salzfüllung 42 kontaktiert oder durchströmt. Um beim Durchströmen einen Austritt von Salz zu verhindern, ist vor dem Kraftstoffausgang 20 ein Sieb 32 angeordnet. Dieses kann Teil der Ummantelung 30 sein oder an der Endkappe 22 angebracht sein. Bei einem an der Ummantelung 30 befindlichen Sieb 32 wird dieses bei einer Auswechselung der Salzkartusche 28 mit ausgewechselt. Eine geeignete Feinheit des Siebes 32 liegt im Bereich von Öffnungsdurchmessern von 25 µm.

Anstelle der Benutzung von losem Salz innerhalb einer Ummantelung 30 kann die Kartusche 28 durch einen festen Salzblock oder einen teilweise plastifizierten Stick gebildet sein. Wie es sich gezeigt hat, ist der Kraftstoff nach Kontaktieren der Salzfüllung 42 durch Beeinflussung des Koaleszenzverhaltens derart konditioniert, dass in dem jeweiligen Kraftstoff-Filtersystem 10, 14, das der Vorrichtung 8 nachgeschaltet ist, eine signifikant verbesserte Wasserabscheidung gewährleistet ist.

Eine geeignete Bauweise für das der Vorrichtung 8 nachgeschaltete Filtersystem, wobei entsprechend der Darstellung von Fig. 1 ein erstes Filtersystem 10 als Vorfilter und ein zweites Filtersystem 14 als Hauptfilter vorgesehen sind, ist in Fig. 5 näher dargestellt.

Fig. 5 zeigt ein Ausführungsbeispiel mit einem als Ganzes mit 40 bezeichneten Filtergehäuse, das an der Oberseite durch einen abnehmbaren Verschlussdeckel 3 dicht abgeschlossen ist. Das Gehäuse 40 besitzt, von einem Bodenteil 5 abgesehen, eine im wesentlichen kreiszylinderförmige Gestalt mit einer zentralen Hochachse 7. Von der bei abgenommenem Deckel 3 offenen Oberseite des Gehäuses 1 her ist ein koaxialer Innenkörper 9 in das Gehäuse 1 eingesetzt, der gegenüber den Gehäusewänden über Dichtungsanordnungen 11, 13, 15 und 17 abgedichtet ist. Der Innenkörper 9 bildet mit seinem koaxialen Innenrohr 19 ein Verdampfergehäuse, worauf nachstehend näher eingegangen ist.

Die Außenseite des Innenrohres 19 grenzt an die Reinseite 21 einer konzentrischen, am Innenkörper 9 gelagerten Kraftstoff-Filtereinrichtung 23 an, zu deren Schmutzseite 25 über einen nicht dargestellten Kraftstoffeinlass, wie es lediglich durch Strömungspfeil 27 angedeutet ist, zugeführt wird. Nach Durchströmen der Filtereinrichtung 23 von außen nach innen gelangt das Dieselöl aus der Reinseite 21 zu einem bodenseitigen Kraftstoffauslass 29.

Die Filtereinrichtung 23 ist in bekannter Weise so aufgebaut, dass in einer Abscheidezone 31 eine Wasserabscheidung erfolgt. Wie mit Pfeil 33 angedeutet, gelangt abgeschiedenes Wasser zusammen mit Dieselöl in einen Sammelraum 35, der durch das an das Bodenteil 5 angrenzende untere Gehäuseabteil gebildet ist. Aufgrund des höheren spezifischen Gewichtes des Wassers gegenüber Dieselöl bildet sich im Betrieb in dem Sammelraum 35 ein bodenseitiger Sumpf 37 aus dem abgeschiedenen Wasser, wobei die obere Trennlinie gegenüber dem darüberliegenden, leichteren Dieselöl mit 39 bezeichnet ist. Die Pegelhöhe der Trennlinie 39 des Sumpfes 37 aus abgeschiedenem Wasser gegenüber dem darüberliegenden Dieselöl wird durch einen Wasserstandssensor 41 erkannt.

Wie mit Strömungspfeil 43 angedeutet, ist am Boden des Sumpfes 37 eine Abgabeeinrichtung 45 angeschlossen, deren Betrieb in Abhängigkeit von den Signalen des Wasserstandssensors 41 steuerbar ist. Beim vorliegenden Ausführungsbeispiel, bei dem die Kraftstoffpumpe stromabwärts des Kraftstoffauslasses 29 angeordnet ist und im Betrieb daher ein Unterdruck im Filtergehäuse 40 gegeben ist, weist die Abgabeeinrichtung 45 eine Pumpe 47 auf. Deren Betrieb ist mittels des Wasserstandssensors 41 so gesteuert, dass im Betrieb aus dem Sammelraum 35 soviel Wasser des Sumpfes 23 abgeführt wird, dass die Trennlinie 39 nicht bis zur Anschlussstelle an der Abgabeeinrichtung 45 absinkt, so dass die Pumpe 47 abgeschiedenes Wasser in eine als Ganzes mit 49 bezeichnete Wasseraufnahme- und Verdampfereinrichtung fördert.

Als Teil der Wasseraufnahme- und Verdampfereinrichtung 49 bildet das Innenrohr 19 des Innenkörpers 9 ein Verdampfergehäuse, das sich stromaufwärts der Abgabeeinrichtung 45 koaxial nach oben zu einem Abdampfausgang 51 erstreckt, an den sich ein Abdampfaustritt 53 im Deckelteil 3 anschließt.

Für eine gesteuerte Verdampfung des durch die Pumpe 47 in das Verdampfergehäuse 19 geforderten Wassers 55, ist am Grund des Verdampfergehäuses ein Element 57 für eine gesteuerte Wärmezufuhr vorhanden. Hierbei kann es sich um eine gesonderte Heizung oder einen Wärmetauscher für die Zufuhr von Motorwärme, Abgaswärme oder Kühlmittelwärme handeln. Mit besonderem Vorteil kann hier ein PTC-Element, d. h. ein Widerstandselement mit positivem Verlauf des Temperaturkoeffizienten, benutzt werden, wobei auf Regel- und Steuereinrichtungen oder Übertemperatursicherung verzichtet werden kann.

Aus dem durch die Pumpe 47 zugeführten, durch Schwerkraft-Schichttrennung im Sammelraum 35 vorgereinigten Wasser 55 wird durch Verdampfen ein Wasserdunst oder-nebel gebildet, der, wie in Fig. 5 angedeutet, im Innenrohr 19 aufsteigt und über den Abdampfausgang 51 des Innenrohres 19 und den Dampfaustritt 53 im Deckelteil 3 nach außen gelangt.

Wie bereits erwähnt, enthält die Wasseraufnahme- und Verdampfereinrichtung 49 eine Sicherheitseinrichtung in Form einer Ventilanordnung, die in Abhängigkeit von einer unzulässigen Menge von unverdampftem, angesammeltem Wasser 55 schließt. Beim vorliegenden Ausführungsbeispiel ist hierfür ein Schwimmerventil vorgesehen, das als Schließkörper eine Schwimmerkugel 49 aufweist, die mit einer Ventilsitzfläche 61 am Abdampfausgang 51 zusammenwirkt und die diesen bei Aufschwimmen durch Anlage an der Ventilsitzfläche 61 verschließt. Bei normaler, durch den Betrieb der Pumpe 47 gesteuerter Flüssigkeitsmenge im Verdampfergehäuse befindet sich die Schwimmerkugel 59, wie in Fig. 5 gezeigt, im Abstand von der Ventilsitzfläche 61, wobei die Kugel 59 auf Halterippen 63 aufliegt.

## Patentansprüche

1. Vorrichtung (8) für ein Kraftstoff-Filtersystem (10, 14), das Wasser aus dem Kraftstoff ausscheidet, wobei mittels der Vorrichtung (8) das Tropfenvolumen des Wasser durch Einwirken eines Mediums (42) in Form eines Salzes vergrößert ist und wobei eine Füllmenge des Salzes mit dem dem Filtersystem (10, 14) zuströmenden Kraftstoff innerhalb eines Gehäuses (1) der Vorrichtung kontaktierbar ist, **dadurch gekennzeichnet, dass** die Füllmenge (42) des Salzes als Block oder Stick in fester Form vorliegt, der jeweils in einem Einsatz (30) in Form einer Kartusche (28) auswechselbar im Gehäuse (1) aufgenommen und derart gestaltet ist, dass sie (28) das Gehäuse passend ausfüllt.

2. Vorrichtung (8) nach Anspruch 1, **dadurch gekennzeichnet, dass** das Wasser durch Einwirken des Mediums (42) eine Polarisation erfährt.

3. Vorrichtung (8) nach einem der Ansprüche 1 oder 2, **dadurch gekennzeichnet, dass** das Wasser durch Einwirken des Mediums (42) eine lonisierung erfährt.

4. Vorrichtung nach einem der Ansprüche 1 bis 3, **dadurch gekennzeichnet, dass** das Medium (42) auf Salzbasis NaCl enthält.

5. Vorrichtung nach einem der Ansprüche 1 bis 4, **dadurch gekennzeichnet, dass** das Gehäuse (1) in eine zum Filtersystem (10, 14) führende Kraftstoffleitung (6, 29) eingefügt ist und einen Kraftstoffeingang (26) und einen Kraftstoffausgang (20) sowie den zwischen diesen befindlichen Einsatz (30) mit der Salzfüllung (42) aufweist, die vom Kraftstoff kontaktierbar oder durchströmbar ist.

6. Vorrichtung nach einem der Ansprüche 1 bis 5, **dadurch gekennzeichnet, dass** die Kartusche (28) eine teilweise Ummantelung der Salzfüllung (42) bildet.

7. Vorrichtung nach einem der Ansprüche 5 oder 6, **dadurch gekennzeichnet, dass** zumindest am Ausgang (20) des Gehäuses (1) ein den unkontrollierten Austritt von Salz verhinderndes Sieb (32) vorgesehen ist.

8. Vorrichtung nach Anspruch 7, **dadurch gekennzeichnet, dass** das Sieb (32) an einem Ende der Ummantelung (30) der Kartusche (28) ausgebildet ist.

## Claims

1. A device (8) for a fuel filter system (10, 14) that separates water from the fuel, by means of the device (8) the volume of water droplets being increased by the action of a medium (42) in the form of a salt, and a fill amount of the salt being able to make contact with the fuel flowing into the filter system (10, 14) within a housing (1) of the device, **characterised in that** the fill amount (42) of the salt is present in solid form as a block or stick which is respectively replaceably received in an insert (30) in the form of a cartridge (28) within the housing (1) and is configured in such a way that it (28) fills the housing snugly.

2. The device (8) according to Claim 1, **characterised in that** the water undergoes polarisation by the action of the medium (42).

3. The device (8) according to either of Claims 1 or 2, **characterised in that** the water undergoes ionisation by the action of the medium (42).

4. The device according to any of Claims 1 to 3, **characterised in that** the salt-based medium (42) contains NaCl.

5. The device according to any of Claims 1 to 4, **characterised in that** the housing (1) is inserted into a fuel line (6, 29) leading to the filter system (10, 14) and has a fuel inlet (26) and a fuel outlet (20) as well as the insert (30) located between the latter containing the salt filling (42) with which the fuel can make contact or through which it can flow.

6. The device according to any of Claims 1 to 5, **characterised in that** the cartridge (28) forms a partial casing of the salt filling (42).

7. The device according to either of Claims 5 or 6, **characterised in that** a screen (32) which prevents the uncontrolled leakage of salt is provided at least at the outlet (20) of the housing (1).

8. The device according to Claim 7, **characterised in that** the screen (32) is formed at one end of the casing (30) of the cartridge (28).

## Revendications

1. Dispositif (8) pour un système (10, 14) de filtration de carburant, qui sépare de l'eau du carburant, dans lequel, au moyen du dispositif (8), le volume de goutte de l'eau est agrandi par l'effet d'un milieu (42) sous la forme d'un sel et dans lequel une quantité de charge du sel peut, à l'intérieur d'un récipient (1) du dispositif, être mise en contact avec le carburant affluant au système (10, 14) de filtration, **caractérisé en ce que** la quantité (42) de charge du sel se présente sous la forme de bloc ou de bâton, sous forme solide, reçu de manière remplaçable dans le récipient (1) dans un insert (30) sous la forme d'une cartouche (28) et conformé de manière à ce qu'elle (28) remplisse le récipient.

2. Dispositif (8) suivant la revendication 1, **caractérisé en ce que** l'eau subit une polarisation par l'effet du milieu (42).

3. Dispositif (8) suivant l'une des revendications 1 ou 2, **caractérisé en ce que** l'eau subit une ionisation par l'effet du milieu (42).

4. Dispositif suivant l'une des revendications 1 à 3, **caractérisé en ce que** le milieu (42) à base de sel contient du NaCl.

5. Dispositif suivant l'une des revendications 1 à 4, **caractérisé en ce que** le récipient (1) est inséré dans un conduit (6, 29) pour du carburant menant au système (10, 14) de filtration et a une entrée (26) de carburant et une sortie (20) de carburant ainsi que l'insert (30) se trouvant entre eux et ayant la charge (42) de sel, qui peut être mise en contact avec le carburant ou qui peut être traversée par le carburant.

6. Dispositif suivant l'une des revendications 1 à 5, **caractérisé en ce que** la cartouche (28) forme une enveloppe partielle de la charge (42) de sel.

7. Dispositif suivant l'une des revendications 5 ou 6, **caractérisé en ce qu'**au moins à une sortie du récipient (1) est prévu un tamis (32) empêchant la sortie non contrôlée de sel.

8. Dispositif suivant la revendication 7, **caractérisé en ce que** le tamis (32) est constitué à une extrémité de l'enveloppe (30) de la cartouche (28).
